# EUROPEAN PATENT APPLICATION

(11) **EP 2 790 094 A2**
(43) Date of publication of application: **15.10.2014**
(21) Application number: 14163032.7
(22) Date of filing: 01.04.2014
(51) Int. Cl.: G06F 3/044

(54) **Conductive sheet pair and touch panel**

(30) Priority: 09.04.2013 JP 2013081127
(71) Applicant: Hosiden Corporation, Yao-shi, Osaka 581-0071 (JP)
(72) Inventor: Shinoda, Koji, Yao-shi, Osaka 581-0071 (JP)
(74) Representative: MERH-IP Matias Erny Reichl Hoffmann

(57) **Abstract**

A conductive sheet pair that does not impair visibility when being stacked is provided. The conductive sheet pair includes a first conductive sheet including a first conductive pattern including a first pattern region in which a plurality of repetitions of a first geometric figure formed of conductive lines are arranged and a first blank region in which the repetitions of the first geometric figure are not arranged, and a second conductive sheet including a second conductive pattern including a second pattern region in which a plurality of repetitions of a second geometric figure formed of conductive lines are arranged and a second blank region in which the repetitions of the second geometric figure are not arranged. The sizes and the relative positions of the first blank region and the second blank region are adjusted so that the first pattern region and the second pattern region do not overlap each other when the first conductive sheet and the second conductive sheet are aligned and stacked together. The pattern regions located side by side with the blank region formed on the second conductive sheet in between are connected by a connection pattern.

## Description

### TECHNICAL FIELD

The present invention relates to a conductive sheet pair and a touch panel and, in particular, to a conductive sheet pair suitable for use in a capacitive touch panel, for example, and a touch panel.

### BACKGROUND ART

Touch panels are widely used in the field of handheld information terminals such as smartphones and tablet computers in these years. While touch panels are mostly used in small devices such as information terminals at present, applications of touch panels to displays such as the displays of desktop PCs will lead to upsizing of touch panels. When ITO (indium tin oxide) is used for electrodes of touch panels, increased touch panel size results in slower transmission of electrical current between the electrodes and slower response time for detecting a touch with a fingertip. To address the problem, Japanese Patent Application Laid-Open No. 2012-238274, for example, discloses conductive sheets on which a plurality of lattices formed of metal thin lines are arranged to form electrodes. By arranging many lattices formed of metal thin lines to form electrodes as in Japanese Patent Application Laid-Open No. 2012-238274, the surface resistance can be reduced to solve the response delay problem described above. A touch panel generally requires both of a conductive sheet including electrodes (x electrodes) for sensing the position of a finger in a first direction (x direction) and a conductive sheet including electrodes (y electrodes) for sensing the position of the finger in a second direction (y direction) perpendicular to the first direction. The conductive sheets are aligned and stacked together with an optically clear adhesive (OCA) layer and a substrate layer in between. The electrodes on the conductive sheets are formed by repetitions of a geometric figure (a lattice) drawn with metal lines finer than the resolution of the naked eye, for example thin metal lines with a thickness of 30 µm or less. Since the repetitions of the geometric figure (a lattice) drawn with a sufficient open area ratio with the thin metal lines finer than the resolution of the naked eye are invisible to the naked eye, a single conductive sheet is perceived as being transparent. However, when the two conductive sheets are stacked together as described above, the thin metal lines on the conductive sheets can be brought close to one another due to displacement that occurred during a process such as an assembly process, as a result, two or more adjacent thin metal lines can be disposed without gaps in the x and y directions to form a bundle that is visible, thereby degrading the visibility of the touch panel.

### SUMMARY OF THE INVENTION

An object of the present invention is to provide a conductive sheet pair that does not impair visibility when being stacked together.

A conductive sheet pair of the present invention includes a first conductive sheet and a second conductive sheet.

The first conductive sheet includes a first conductive pattern including a first pattern region in which a plurality of repetitions of a first geometric figure formed of conductive lines are arranged and a first blank region in which the repetitions of the first geometric figure are not arranged. The second conductive sheet includes a second conductive pattern including a second pattern region in which a plurality of repetitions of a second geometric figure formed of conductive lines are arranged and a second blank region in which the repetitions of the second geometric figure are not arranged. The sizes and the relative positions of the first blank region and the second blank region are adjusted so that the first pattern region and the second pattern region do not overlap each other when the first conductive sheet and the second conductive sheet are aligned and stacked together. The pattern regions located side by side with the blank region formed on the second conductive sheet in between are connected by a connection pattern.

### EFFECT OF THE INVENTION

A conductive sheet pair of the present invention does not impair the visibility when the conductive sheet pair is stacked.

### BRIEF DESCRIPTION OF THE DRAWINGS

Fig. 1 shows plan views of a conductive sheet pair of a first embodiment of the present invention and partial enlarged views of conductive patterns of the conductive sheet pair;
Fig. 2 shows a cross-sectional view illustrating a configuration of the touch panel of the first embodiment of the present invention, where some parts of which are omitted from the figure;
Fig. 3 shows plan views of conductive patterns on the conductive sheet pair of the first embodiment of the present invention and a plan view of the conductive sheet pair aligned and stacked;
Fig. 4 shows plan views of conductive patterns of a conductive sheet pair of a second embodiment of the present invention and a plan view of the conductive sheet pair aligned and stacked;
Fig. 5 shows plan views of conductive patterns of a conductive sheet pair of a third embodiment of the present invention and a plan view of the conductive sheet pair aligned and stacked;
Fig. 6 shows plan views of conductive patterns of a conductive sheet pair of a fourth embodiment of the present invention and a plan view of the conductive sheet pair aligned and stacked;
Fig. 7 shows plan views of conductive patterns of a conductive sheet pair of a fifth embodiment of the present invention and a plan view of the conductive sheet pair aligned and stacked; and
Fig. 8 is a diagram illustrating an example of a lattice formed with curved conductive lines.

### DETAILED DESCRIPTION OF THE EMBODIMENTS

Embodiments of the present invention will be described below in detail. Components having the same functions are given the same reference numerals and repeated description of those components will be omitted.

### FIRST EMBODIMENT

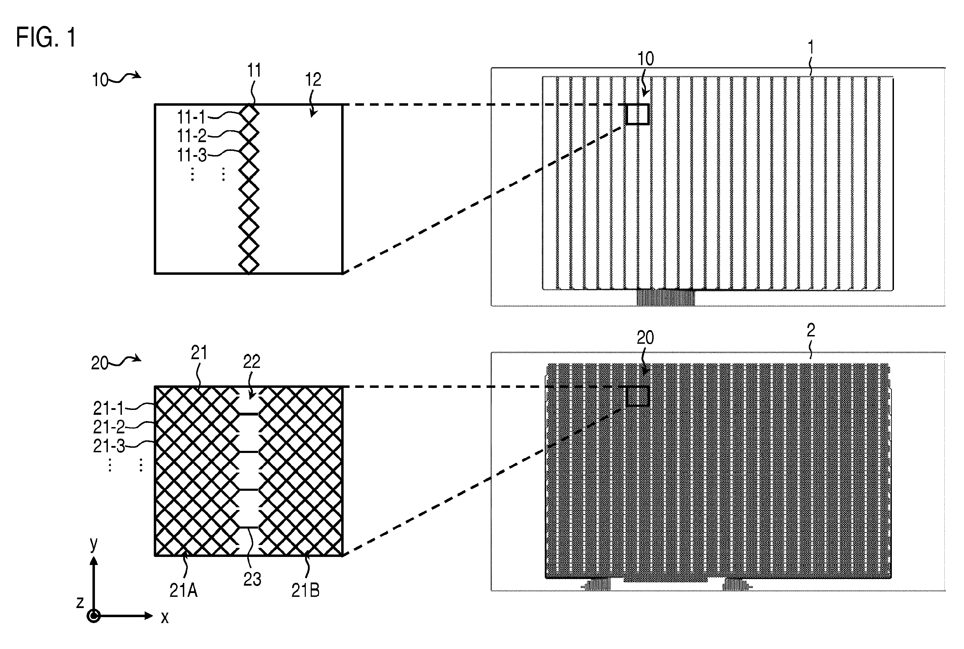

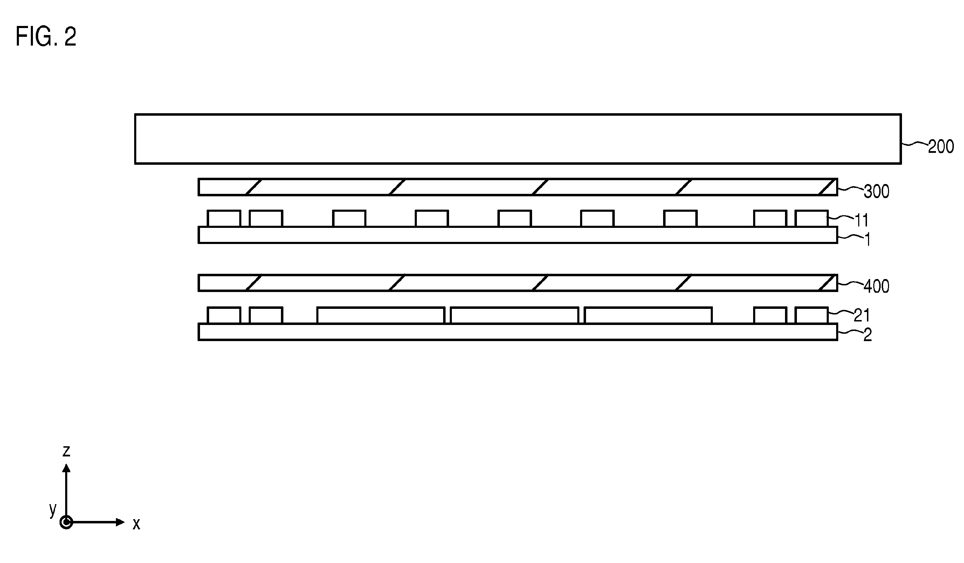

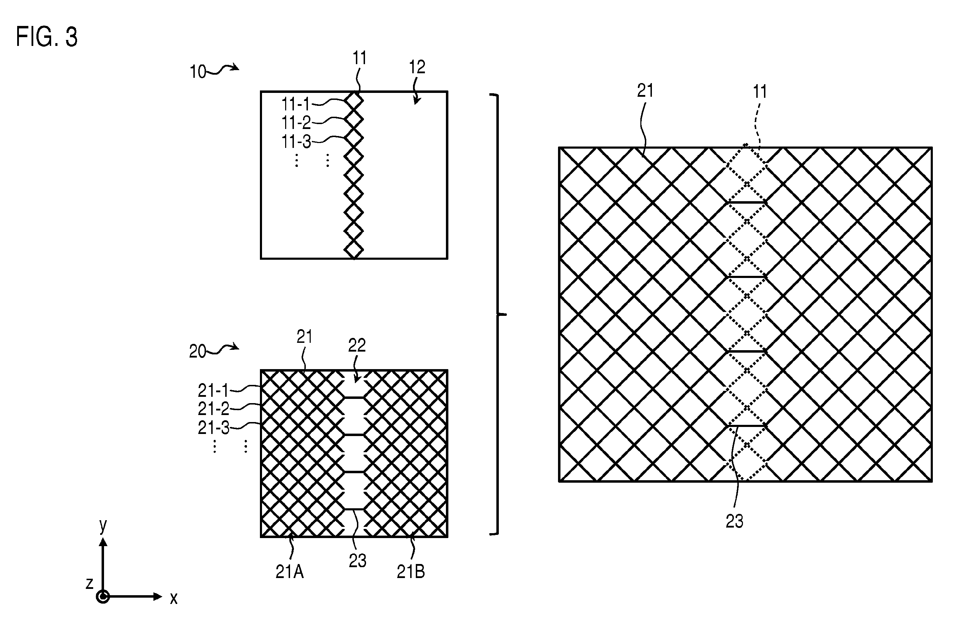

A conductive sheet pair and a touch panel of a first embodiment of the present invention will be described with reference to Figs. 1, 2 and 3. Fig. 1 shows plan views of a conductive sheet pair of a first embodiment and partial enlarged views of conductive patterns of the conductive sheet pair. Fig. 2 shows a cross-sectional view illustrating a configuration of a touch panel of the first embodiment, where some parts of which are omitted from the figure. Fig. 3 shows plan views of conductive patterns of the conductive sheet pair of the first embodiment and a plan view of the conductive sheet pair aligned and stacked. As illustrated in Fig. 1, the conductive sheet pair of the first embodiment includes a first conductive sheet 1 and a second conductive sheet 2. On the first conductive sheet 1, a first conductive pattern 10 including a first pattern region 11 in which diamond-shaped lattice cells 11-1, 11-2, 11-3, ... formed of conductive lines are arranged in a column along the y direction and a first blank region 12 in which the diamond-shaped lattice cells 11-1, 11-2, 11-3 are not arranged is periodically formed. Note that the conductive lines may be made of any material that is conductive and with which a conductive pattern can be formed; for example, the conductive lines may be made of a metal or a carbon-based material. On the second conductive sheet 2, a second conductive pattern 20 including a second pattern region 21 in which many diamond-shaped lattice cells 21-1, 21-2, 21-3, ... formed of conductive lines are arranged without a break and a second blank region 22 in which the diamond-shaped lattice cells 21-1, 21-2, 21-3, ... are not arranged is periodically formed. The first pattern region 11 functions as y electrodes. The second pattern region 21 functions as x electrodes. The conductive sheets may be made of a transparent insulating substrate material. The transparent insulating substrate material may be a resin-based film such as PET, PC or COP or may be glass. Note that the pattern pitches of the diamond-shaped lattice cells 11-1, 11-2, 11-3, ... and the diamond-shaped lattice cells 21-1, 21-2, 21-3, ... are preferably greater than or equal to 300 µm. As has been described previously, the conductive lines need to be finer than the resolution of the naked eye. The sizes and relative positions of the first blank region 12 and the second blank region 22 are adjusted so that the first pattern region 11 and the second pattern region 21 do not overlap each other when the first conductive sheet 1 and the second conductive sheet 2 are aligned and stacked together. Specifically, since the first pattern region 11 is formed by arranging the diamond-shaped lattice cells 11-1, 11-2, 11-3, ... in a column along the y direction, the second blank region 22 is formed in a stripe whose length is along the y direction so as to conforming to the first pattern region 11. The width of the second blank region 22 in the x direction is made larger than the width in the x direction of the diamond-shaped lattice cells 11-1, 11-2, 11-3, ... forming the first pattern region 11 by approximately 0.1 mm, for example, in order to provide margins allowing for displacement during the assembly process. Note that an optimum value of the margins provided differs depending on the method for stacking. Since the diamond-shaped lattice cells 21-1, 21-2, 21-3, ... are arranged without a break to form the second pattern region 21 in the regions other than the second blank region 22, the first blank region 12 occupies all the regions other than the first pattern region 11 so as to conform to the regions. Note that the second pattern region 21 is separated into two regions 21A and 21B by the second blank region 22 as illustrated in Figs. 1 and 3. The regions 21A and 21B located side by side with the blank region 22 in between are connected by a connection pattern 23 formed as straight lines. The connection pattern 23 is formed in order to provide electrical continuity between the regions 21A and 21B because the second pattern region 21 needs to be electrically continuous in the x direction. Forming the connection pattern 23 at an angle different from the angles of any of the straight lines included in the repetitions of the geometric figure formed on the first conductive sheet 1 (the diamond-shaped lattice cells 11-1, 11-2, 11-3, ...) can prevent the connection pattern 23 from being disposed adjacent to any of conductive lines forming the diamond-shaped lattice cells 11-1, 11-2, 11-3, ... to form thick bundles and therefore is preferable from the point of view of the visibility of the touch panel. As illustrated in Figs. 1 and 3, the angle between the connection pattern 23 and any of the conductive lines forming the diamond-shaped lattice cells 11-1, 11-2, 11-3, ... may be 45 degrees, for example. The angle between the connection pattern 23 formed in the x direction and each side of the diamond shapes changes when the shape of the diamond-shaped lattice cells is horizontally or vertically elongated. In order to prevent degradation of the visibility due to displacement that can occur during the assembly process noted above, it is preferable that the angle between the connection pattern 23 and any of the straight lines included in the diamond-shaped lattice cells be greater than or equal to 45 degrees and less than or equal to 90 degrees. Note that the spacing between the straight lines of the connection pattern 23 may be greater than the spacing between the rows of the diamond-shaped lattice cells 21-1 ... along the y direction. In this embodiment, one straight line of the connection pattern 23 is formed for every two rows of the diamond-shaped lattice cells 21-1 ... along the y direction as illustrated in Figs. 1 and 3. Alternatively, each straight line of the connection pattern 23 may be formed for any number (3, 4 or more) of rows of the diamond-shaped lattice cells 21-1 ... along the y direction. The spaces between the straight lines of the connection pattern 23 may be irregular. In that case, the number of rows of the diamond-shaped lattice cells 21-1 along the y direction is preferably greater than the number of the straight lines of the connection pattern 23. The straight lines of the connection pattern 23 are preferably made thinner than at least any of the conductive lines forming the diamond-shaped lattice cells 11-1 ... and the diamond-shaped lattice cells 21-1 .... There are similar variations of the spacing between the straight lines of the connection pattern 23 and the width of the straight lines of the connection pattern 23 in second to fifth embodiments, which will be described later, as well.

Aligning and stacking the first conductive pattern 10 and the second conductive pattern 20 thus formed result in the pattern illustrated in the right-hand drawing of Fig. 3. The first pattern region 11 is represented by dotted lines in the right-hand drawing of Fig. 3 in order to distinguish from the second pattern region 21 and the connection pattern 23.

The conductive sheet pair described above is stacked as illustrated in Fig. 2: the second conductive sheet 2, a second OCA layer 400, the first conductive sheet 1, a first OCA layer 300 and a cover glass 200 are stacked in this order in the z direction from the bottom. The touch panel of this embodiment includes other components such as control circuitry (such as IC circuitry), not depicted, in addition to the components in Fig. 2.

According to the conductive sheet pair and the touch panel of this embodiment, since the first conductive pattern 10 on the first conductive sheet 1 and the second conductive pattern 20 on the second conductive sheet 2 are configured as described above, the first pattern region 11 and the second pattern region 21 of the conductive sheet pair of this embodiment are not overlap each other as illustrated in Fig. 3; since the connection pattern 23 is formed of conductive lines at an angle different from the angles of the conductive lines in the first pattern region 11 close to the connection pattern 23, formation of bundles of metal lines due to displacement in the assembly process can be prevented. Consequently, a conductive sheet pair and a touch panel whose visibility is not impaired by the stack can be implemented.

### SECOND EMBODIMENT

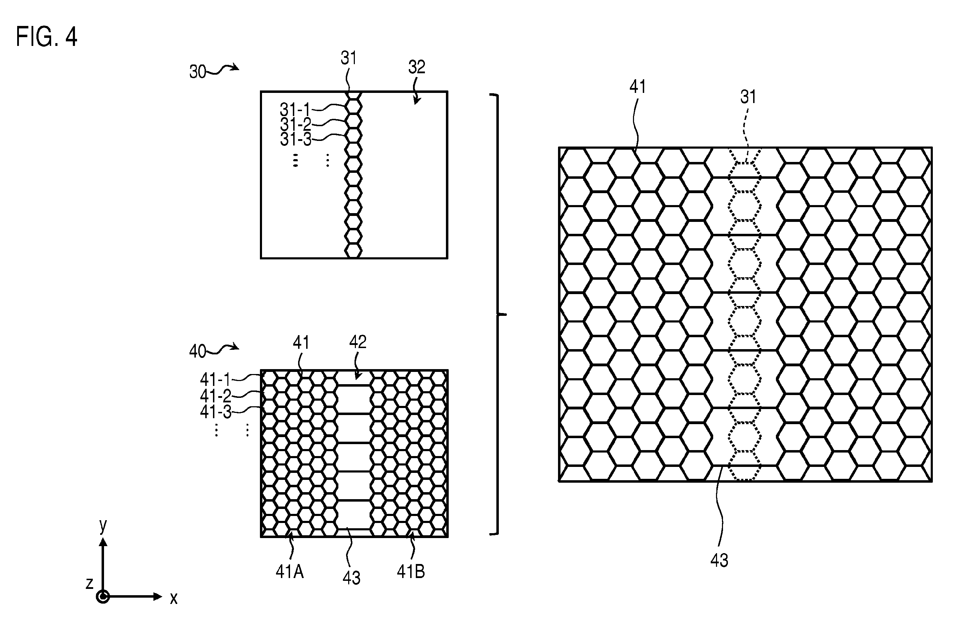

A conductive sheet pair and a touch panel according to a second embodiment of the present invention will now be described with reference to Fig. 4. Fig. 4 shows plan views of conductive patterns of a conductive sheet pair of second embodiment and a plan view of the conductive sheet pair aligned and stacked. The second embodiment is an example in which the diamond-shaped lattice cells forming the pattern regions in the first embodiment are replaced with hexagonal lattice cells.

Specifically, on the first conductive sheet, a first conductive pattern 30 including a first pattern region 31 in which hexagonal lattice cells 31-1, 31-2, 31-3, ... formed of conductive lines are arranged in a column along the y direction and a first blank region 32 in which the hexagonal lattice cells 31-1, 31-2, 31-3 ... are not arranged is periodically formed as illustrated in Fig. 4. Similarly, on the second conductive sheet, a second conductive pattern 40 including a second pattern region 41 in which many hexagonal lattice cells 41-1, 41-2, 41-3, ... formed of conductive lines are arranged without a break and a second blank region 42 in which the hexagonal lattice cells 41-1, 41-2, 41-3, ... are not arranged is periodically formed. The second pattern region 41 forms a honeycomb structure. As in the first embodiment, the first pattern region 31 functions as y electrodes and the second pattern region 41 functions as x electrodes. As in the first embodiment, the pattern pitches of the hexagonal lattice cells 31-1, 31-2, 31-3, ... and the hexagonal lattice cells 41-1, 41-2, 41-3, ... are preferably greater than or equal to 300 µm. As has been described previously, the conductive lines need to be finer than the resolution of the naked eye. As in the first embodiment, the sizes and relative positions of the first blank region 32 and the second blank region 42 are adjusted so that the first pattern region 31 and the second pattern region 41 do not overlap each other when the two conductive sheets are aligned and stacked together. As in the first embodiment, the second blank region 42 is formed in a stripe whose length is along the y direction and the width of the second blank region 42 in the x direction is made larger than the width in the x direction of the hexagonal lattice cells 31-1, 31-2, 31-3, ... forming the first pattern region 31 by a predetermined margin. As in the first embodiment, the second pattern region 41 is separated into two regions 41A and 41B by the second blank region 42 and the two regions 41A and 41B are electrically continuously connected by a connection pattern 43 formed as straight lines.

The first pattern region and the second pattern region have honeycomb structure as described above and thereby the conductive sheet pair and the touch panel of the second embodiment have the same advantageous effects as the conductive sheet pair and the touch panel of the first embodiment.

### THIRD EMBODIMENT

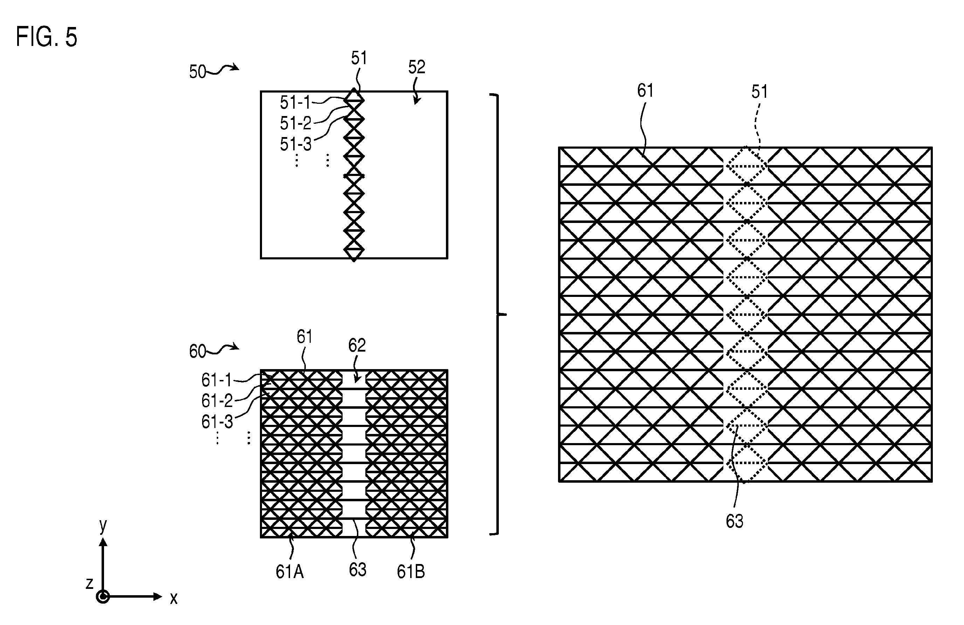

A conductive sheet pair and a touch panel according to a third embodiment of the present invention will now be described with reference to Fig. 5. Fig. 5 shows plan views of conductive patterns of a conductive sheet pair of third embodiment and a plan view of the conductive sheet pair aligned and stacked. The third embodiment is an example in which each of the diamond-shaped lattice cells forming the first pattern region 11 in the first embodiment is subdivided into two to form a lattice of triangular lattice cells.

Specifically, on the first conductive sheet, a first conductive pattern 50 including a first pattern region 51 in which triangular lattice cells 51-1, 51-2, 51-3, ... formed of conductive lines are arranged in a column in the y direction and a first blank region 52 in which the triangular lattice cells 51-1, 51-2, 51-3 ... are not arranged is periodically formed as illustrated in Fig. 5. Similarly, on the second conductive sheet, a second conductive pattern 60 including a second pattern region 61 in which many triangular lattice cells 61-1, 61-2, 61-3, ... formed of conductive lines are arranged without a break and a second blank region 62 in which the triangular lattice cells 61-1, 61-2, 61-3, ... are not arranged is periodically formed. As in the first embodiment, the first pattern region 51 functions as y electrodes and the second pattern region 61 functions as x electrodes. As in the first embodiment, the pattern pitches of the triangular lattice cells 51-1, 51-2, 51-3, ... and the triangular lattice cells 61-1, 61-2, 61-3, ... are preferably greater than or equal to 300 µm. As has been described previously, the conductive lines need to be finer than the resolution of the naked eye. As in the first embodiment, the sizes and relative positions of the first blank region 52 and the second blank region 62 are adjusted so that the first pattern region 51 and the second pattern region 61 do not overlap each other when the two conductive sheets are aligned and stacked together. As in the first embodiment, the second blank region 62 is formed in a stripe whose length is along the y direction and the width of the second blank region 62 in the x direction is made larger than the width in the x direction of the triangular lattice cells 51-1, 51-2, 51-3, ... forming the first pattern region 51 by a predetermined margin. As in the first embodiment, the second pattern region 61 is separated into two regions 61A and 61B by the second blank region 62 and the two regions 61A and 61B are electrically continuously connected by a connection pattern 63 formed as straight lines.

The first pattern region and the second pattern region uses triangular lattice cells as described above and thereby the conductive sheet pair and the touch panel of the third embodiment have the same advantageous effects as the conductive sheet pair and the touch panel of the first embodiment.

### FOURTH EMBODIMENT

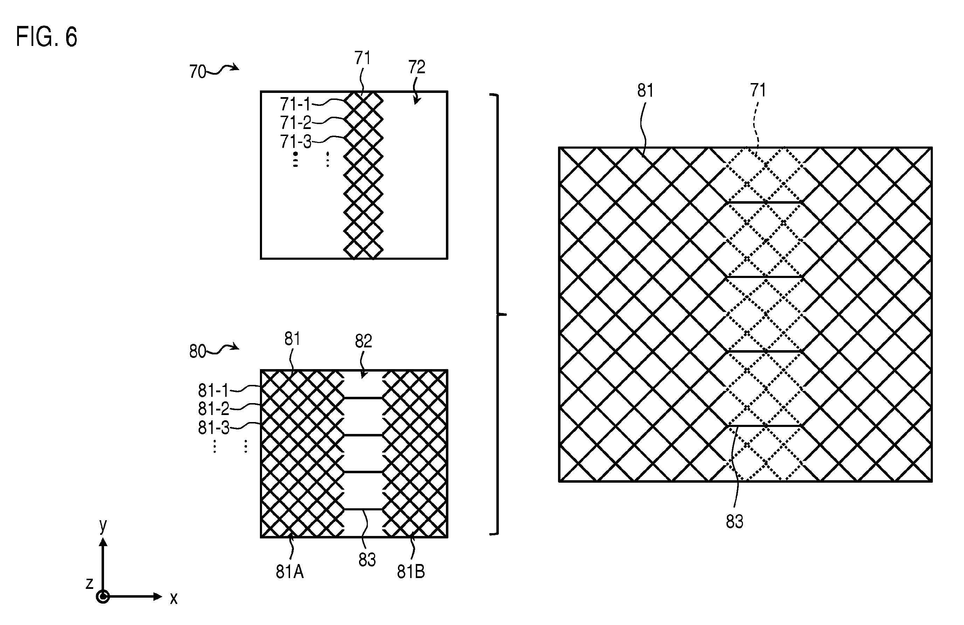

A conductive sheet pair and a touch panel according to a fourth embodiment of the present invention will now be described with reference to Fig. 6. Fig. 6 shows plan views of conductive patterns of a conductive sheet pair of a fourth embodiment and a plan view of the conductive sheet pair aligned and stacked. The fourth embodiment is an example in which the diamond-shaped lattice cells forming the first pattern region 11 of the first embodiment are arranged in two columns along the y direction.

Specifically, on the first conductive sheet, a first conductive pattern 70 including a first pattern region 71 in which diamond-shaped lattice cells 71-1, 71-2, 71-3, ... formed of conductive lines are arranged in two columns along the y direction and a first blank region 72 in which the diamond-shaped lattice cells 71-1, 71-2, 71-3 are not arranged is periodically formed as illustrated in Fig. 6. Similarly, on the second conductive sheet, a second conductive pattern 80 including a second pattern region 81 in which many diamond-shaped lattice cells 81-1, 81-2, 81-3, ... formed of conductive lines are arranged without a break and a second blank region 82 in which the diamond-shaped lattice cells 81-1, 81-2, 81-3, ... are not arranged is periodically formed. The relative positions of the first pattern region 71, the first blank region 72, the second pattern region 81 and the second blank region 82 and the margins are adjusted in a manner similar to the manner in the first embodiment. As in the first embodiment, the second pattern region 81 is separated into two regions 81A and 81B by the second blank region 82 and the two regions 81A and 81B are electrically continuously connected by a connection pattern 83 formed as straight lines.

### FIFTH EMBODIMENT

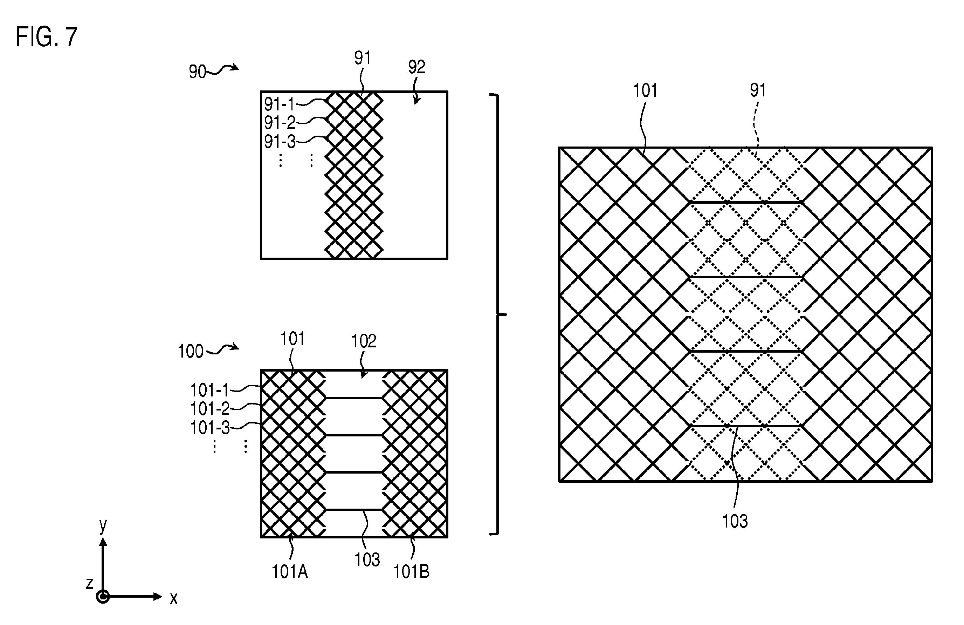

A conductive sheet pair and a touch panel according to a fifth embodiment of the present invention will now be described with reference to Fig. 7. Fig. 7 shows plan views of conductive patterns of a conductive sheet pair of a fifth embodiment and a plan view of the conductive sheet pair aligned and stacked. The fifth embodiment is an example in which the diamond-shaped lattice cells forming the first pattern region 11 of the first embodiment are arranged in three columns along the y direction.

Specifically, on the first conductive sheet, a first conductive pattern 90 including a first pattern region 91 in which diamond-shaped lattice cells 91-1, 91-2, 91-3, ... formed of conductive lines are arranged in three columns along the y direction and a first blank region 92 in which the diamond-shaped lattice cells 91-1, 91-2, 91-3 are not arranged is periodically formed as illustrated in Fig. 7. Similarly, on the second conductive sheet, a second conductive pattern 100 including a second pattern region 101 in which many diamond-shaped lattice cells 101-1, 101-2, 101-3, ... formed of conductive lines are arranged without a break and a second blank region 102 in which the diamond-shaped lattice cells 101-1, 101-2, 101-3, ... are not arranged is periodically formed. The relative positions of the first pattern region 91, the first blank region 92, the second pattern region 101 and the second blank region 102 and the margins are adjusted in a manner similar to the manner in the first embodiment. As in the first embodiment, the second pattern region 101 is separated into two regions 101A and 101B by the second blank region 102 and the two regions 101A and 101B are electrically continuously connected by a connection pattern 103 formed as straight lines.

The first pattern region includes a plurality of columns as described above and thereby the conductive sheet pair and the touch panels of the fourth and fifth embodiments have the same advantageous effects as the conductive sheet pair and the touch panel of the first embodiment.

While the fourth and fifth embodiments have been disclosed with examples in which the first pattern regions are made up of two and three columns, respectively, the present invention is not limited to these; the first pattern region may be formed as any plurality of columns. While the fourth and fifth embodiments have been disclosed with examples in which the first and second pattern regions have diamond-shaped lattice cells, the first and second pattern regions are not limited to these. Hexagonal lattice cells as in the second embodiment or triangular lattice cells as in the third embodiment may be used to form a conductive sheet pair having the first pattern region of any plurality of columns.

### FIRST VARIATION

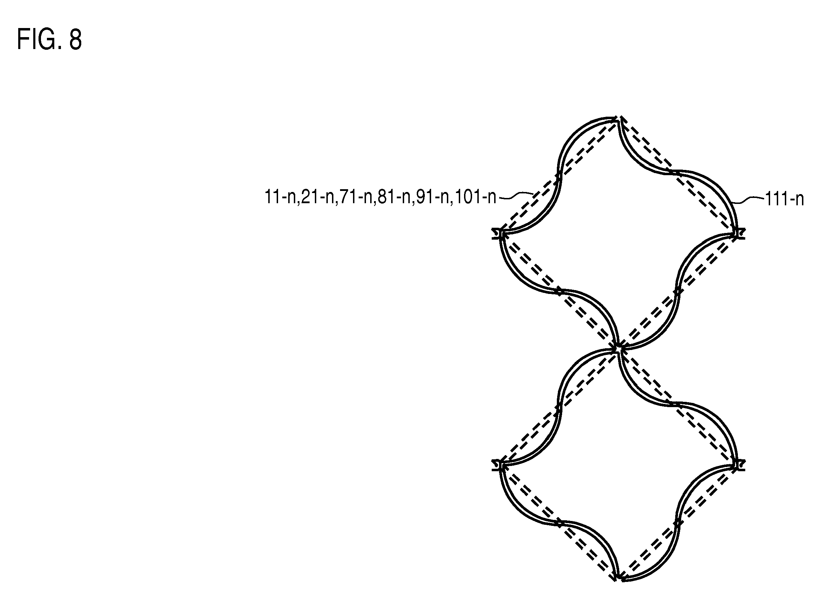

A conductive sheet pair and a touch panel according to a first variation of the present invention will now be described. The conductive sheet pair of the first variation of the present invention is characterized in that a part or all of a first pattern region and a second pattern region formed on the conductive sheets are formed with curved conductive lines. An example will be described with reference to Fig. 8. Fig. 8 is a diagram illustrating an example of a lattice cell formed of curved conductive lines. The first and second pattern regions in the first, fourth and fifth embodiments are formed by arranging the diamond-shaped lattice cells 11-n, 21-n, 71-n, 81-n, 91-n and 101-n (n is an arbitrary positive integer). In the example in Fig. 8, the sides of these diamond-shaped lattice cells are replaced with wavy lines (sine curves) to form lattice cells 111-n. In order to arrange the lattice cells without a break, the period length of the wavy lines (sine curve) needs to be equal to the length of each side of the diamond-shaped lattice cell or an integer multiple of the period length of the wavy lines needs to be equal to the length of each diamond-shaped lattice cell.

The wavy lines (sine curves) are not limited to the pattern illustrated in Fig. 8; for example a lattice cell may be formed with triangular lattice cells each side of which is a wavy line (sine curve) or with hexagonal lattice cells each side of which is a wavy line (sine curve). Note that the connection patterns 23, 43, 63, 83 and 103 do not need to be formed as straight lines but any curved lines may be used. For example, the connection patterns 23, 43, 63, 83, and 103 may be formed as sine curves as illustrated in Fig. 8.

While the embodiments disclosed above are described with examples in which patterns are formed of diamond-shaped lattice cells, triangular lattice cells and hexagonal lattice cells, other geometric figures may be used as lattice cells or a combination of a plurality of geometric figures may be used to form a pattern. While the embodiment disclosed above are described with examples in which a plurality of transparent conductive films are stacked to form a conductive sheet pair, the present invention is not limited to this. For example, a conductive sheet pair and a touch panel may be formed by forming circuit patterns similar to any of those described above on both sides of an insulating substrate, or a conductive sheet pair or a touch panel may be formed by stacking circuitry on an insulating substrate in the order of an insulating substrate, circuitry, an insulating substrate, circuitry. Further, another conductive layer (for example ITO) may be provided between the conductive sheet pair, the substrate of the touch panel, and a circuit layer.

## Claims

1. A conductive sheet pair (1 and 2) comprising:
a first conductive sheet (1) comprising a first conductive pattern (10, 30, 50, 70, 90) including a first pattern region (11, 31, 51, 71, 91) in which a plurality of repetitions of a first geometric figure (11-n, 31-n, 51-n, 71-n, 91-n) formed of conductive lines are arranged and a first blank region (12, 32, 52, 72, 92) in which the repetitions of the first geometric figure (11-n, 31-n, 51-n, 71-n, 91-n) are not arranged; and
a second conductive sheet (2) comprising a second conductive pattern (20, 40, 60, 80, 100) including a second pattern region (21, 41, 61, 81, 101) in which a plurality of repetitions of a second geometric figure (21-n, 41-n, 61-n, 81-n, 101-n) formed of conductive lines are arranged and a second blank region (22, 42, 62, 82, 102) in which the repetitions of the second geometric figure (21-n, 41-n, 61-n, 81-n, 101-n) are not arranged;
wherein the sizes and the relative positions of the first blank region (12, 32, 52, 72, 92) and the second blank region (22, 42, 62, 82, 102) are adjusted so that the first pattern region (11, 31, 51, 71, 91) and the second pattern region (21, 41, 61, 81, 101) do not overlap each other when the first conductive sheet (1) and the second conductive sheet (2) are aligned and stacked together; and
pattern regions (21A and 21B, 41A and 41B, 61A and 61B, 81A and 81B, 101A and 101B) located side by side with the blank region (22, 42, 62, 82, 102) formed on the second conductive sheet(2) in between are connected by a connection pattern (23, 43, 63, 83, 103).

2. The conductive sheet pair (1 and 2) according to Claim 1,
wherein the connection pattern (23, 83, 103) formed on one of the conductive sheets (2) is at an angle different from an angle of any of straight lines included in the geometric figure (11-n, 71-n, 91-n) formed on the other conductive sheet (1) when the first conductive sheet (1) and the second conductive sheet (2) are aligned and stacked together.

3. The conductive sheet pair (1 and 2) according to Claim 2,
wherein the angle between the connection pattern (23, 83, 103) formed on one of the conductive sheet (2) and any of the straight lines included in the geometric figure (11-n, 71-n, 91-n) formed on the other conductive sheet (1) is greater than or equal to 45 degrees and less than or equal to 90 degrees when the first conductive sheet (1) and the second conductive sheet (2) are aligned and stacked together.

4. The conductive sheet pair (1 and 2) according to any one of Claims 1 to 3,
wherein the first geometric figure (11-n, 71-n, 91-n) and the second geometric figure (21-n, 81-n, 101-n) are diamond shaped.

5. The conductive sheet pair (1 and 2) according to Claim 1,
wherein the first geometric figure (31-n) and the second geometric figure (41-n) are hexagon.

6. The conductive sheet pair (1 and 2) according to Claim 1,
wherein the first geometric figure (51-n) and the second geometric figure (61-n) are triangular.

7. The conductive sheet pair (1 and 2) according to any one of Claims 1 to 6,
wherein the first pattern region (11,31,51) is formed by arranging the repetitions of the first geometric figure (11-n, 31-n, 51-n) in a column.

8. The conductive sheet pair (1 and 2) according to any one of Claims 1 to 7,
wherein the number of rows of the repetitions of the first (11-n, 31-n, 51-n, 71-n, 91-n) or second geometric figure (21-n, 41-n, 61-n, 81-n, 101-n) along the direction in which the connection pattern (23, 43, 63, 83, 103) is arranged is greater than the number of rows of the connection pattern (23, 43, 63, 83, 103).

9. The conductive sheet pair according to any one of Claims 1 to 8,
wherein the connection pattern (23, 43, 63, 83, 103) is formed of conductive lines thinner than any of the conductive lines forming the first (11-n, 31-n, 51-n, 71-n, 91-n) and second geometric figure (21-n, 41-n, 61-n, 81-n, 101-n).

10. A touch panel comprising:
a first conductive sheet (1) comprising a first conductive pattern (10, 30, 50, 70, 90) including a first pattern region (11, 31, 51, 71, 91) in which a plurality of repetitions of a first geometric figure (11-n, 31-n, 51-n, 71-n, 91-n) formed of conductive lines are arranged and a first blank region (12, 32, 52, 72, 92) in which the repetitions of the first geometric figure (11-n, 31-n, 51-n, 71-n, 91-n) are not arranged; and
a second conductive sheet (2) comprising a second conductive pattern (20, 40, 60, 80, 100) including a second pattern region (21, 41, 61, 81, 101) in which a plurality of repetitions of a second geometric figure (21-n, 41-n, 61-n, 81-n, 101-n) formed of conductive lines are arranged and a second blank region (22, 42, 62, 82, 102) in which the repetitions of the second geometric figure (21-n, 41-n, 61-n, 81-n, 101-n) are not arranged;
wherein the sizes and the relative positions of the first blank region (12, 32, 52, 72, 92) and the second blank region (22, 42, 62, 82, 102) are adjusted so that the first pattern region (11, 31, 51, 71, 91) and the second pattern region (21, 41, 61, 81, 101) do not overlap each other when the first conductive sheet (1) and the second conductive sheet (2) are aligned and stacked together; and
pattern regions (21A and 21B, 41A and 41B, 61A and 61B, 81A and 81B, 101A and 101B) located side by side with the blank region (22, 42, 62, 82, 102) formed on the second conductive sheet(2) in between are connected by a connection pattern (23, 43, 63, 83, 103).

11. The touch panel according to Claim 10,
wherein the connection pattern (23, 83, 103) formed on one of the conductive sheets (2) is at an angle different from an angle of any of straight lines included in the geometric figure (11-n, 71-n, 91-n) formed on the other conductive sheet (1) when the first conductive sheet (1) and the second conductive sheet (2) are aligned and stacked together.

12. The touch panel according to Claim 11,
wherein the angle between the connection pattern (23, 83, 103) formed on one of the conductive sheet (2) and any of the straight lines included in the geometric figure (11-n, 71-n, 91-n) formed on the other conductive sheet (1) is greater than or equal to 45 degrees and less than or equal to 90 degrees when the first conductive sheet (1) and the second conductive sheet (2) are aligned and stacked together.

13. The touch panel according to any one of Claims 10 to 12,
wherein the first geometric figure (11-n, 71-n, 91-n) and the second geometric figure (21-n, 81-n, 101-n) are diamond shaped.

14. The touch panel according to Claim 10,
wherein the first geometric figure (31-n) and the second geometric figure (41-n) are hexagonal.

15. The touch panel according to Claim 10,
wherein the first geometric figure (51-n) and the second geometric figure (61-n) are triangular.

16. The touch panel according to any one of Claims 10 to 15,
wherein the first pattern region (11,31,51) is formed by arranging the repetitions of the first geometric figure (11-n, 31-n, 51-n) in a column.

17. The touch panel according to any one of Claims 10 to 16,
wherein the number of rows of the repetitions of the first (11-n, 31-n, 51-n, 71-n, 91-n) or second geometric figure (21-n, 41-n, 61-n, 81-n, 101-n) along the direction in which the connection pattern (23, 43, 63, 83, 103) is arranged is greater than the number of rows of the connection pattern (23, 43, 63, 83, 103).

18. The touch panel according to any one of Claims 10 to 17,
wherein the connection pattern (23, 43, 63, 83, 103) is formed of conductive lines thinner than any of the conductive lines forming the first (11-n, 31-n, 51-n, 71-n, 91-n) and second geometric figure (21-n, 41-n, 61-n, 81-n, 101-n).
